**Europäisches Patentamt**

**European Patent Office**

**Office européen des brevets**

(19)

(11) Publication number: **0 311 280 B1**

(12) **EUROPEAN PATENT SPECIFICATION**

(45) Date of publication of patent specification :
27.11.91 Bulletin 91/48

(51) Int. Cl.⁵ : **A21C 1/14**

(21) Application number : **88308843.7**

(22) Date of filing : **23.09.88**

(54) **Mixing of farinaceous material.**

(30) Priority : 26.09.87 GB 8722684

(43) Date of publication of application :
12.04.89 Bulletin 89/15

(45) Publication of the grant of the patent :
27.11.91 Bulletin 91/48

(84) Designated Contracting States :
AT BE CH DE ES FR GB GR IT LI LU NL SE

(56) References cited :
EP-A- 0 157 987
FR-A- 1 395 397
FR-A- 2 131 612
GB-A- 2 017 480

(73) Proprietor : **TWEEDY OF BURNLEY LIMITED**
**Peel Mill Gannow Lane**
**Burnley BB12 6JL Lancashire (GB)**

(72) Inventor : **Clyde, Neil**
**7 Ennerdale Road**
**Burnley Lancashire (GB)**

(74) Representative : **Sherrard-Smith, Hugh et al**
**Appleyard, Lees & Co. 15 Clare Road**
**Halifax, HX1 2HY West Yorkshire (GB)**

## Description

The present invention relates to the mixing of farinaceous material and to a method of, and apparatus for, such mixing. The invention is particularly, although not exclusively, applicable to the mixing of dough.

It is known to mix dough with a machine having a rotating mixing element which initially rotates at a low speed, during the hydration of the mixture, and then at a higher speed whilst the dough is being developed. During the initial mixing of the dough, relatively little resistance to the movement of the mixing element is provided, but, as the dough starts to be developed, that resistance is increased. Accordingly, during the initial mixing, at low speed, the motor driving the mixing element is using only a small proportion of its maximum power.

An alternative mixing element is arranged to be rotated at a constant rate throughout a batch mix, and the power provided by the motor is below its optimum output during the initial mixing but rises significantly when the dough is being developed and tends to resist more strenuously the rotation of the mixing element. Again power is wasted.

The features of the preamble of method claim 1 are known from everyday food mixing procedures carried out in domestic kitchens. Similarly, the features of the preamble of apparatus claim 9 are known the food mixers used to carry out everyday food mixing tasks.

According to one aspect of the present invention a method of mixing a batch of farinaceous material with a mixing implement which comprises a motor causing said implement to rotate, with the resistance of the farinaceous material to movement of the mixing implement increasing as the material becomes developed, is characterised in that the power required by the motor is maintained in the region of a constant level by decreasing the speed of rotation of the implement as the material becomes developed.

The method may comprise maintaining the power required by the motor in the region of a constant level for a part of the mixing of a batch or for substantially the whole of a mixing of a batch.

The method may comprise decreasing the speed of rotation in a step or steps or, alternatively or additionally, gradually.

The method may comprise controlling the speed of rotation in accordance with a sensed condition. The sensed condition may be related to the power requirement of a motor causing the rotation of the implement. The method may comprise setting a current value or limit for the motor and altering the speed or rotation to maintain that current value or limit at or in the region set.

According to another aspect of the present invention farinaceous batch mixing apparatus comprising a container for farinaceous material, a mixing implement arranged to rotate within the container and a motor adapted to cause rotation of the mixing implement is characterised in that control means are provided which are adapted to maintain the power required by the motor in the region of a constant level by decreasing the speed of rotation of the implement automatically as the material in the batch mix becomes developed.

The control means may be adapted to maintain the power required by the motor in the region of a constant level for substantially the whole of the mixing of a batch.

Given that the power supplied to the motor is proportional to the energy put into the mixture by the implement, if a given mix requires a certain amount of energy to be mixed and worked, then if the energy input can be maximised either over the whole or a part of the mix, the time for the mix can be reduced from conventional mixing techniques.

The invention may be carried into practice in various ways, but various embodiments will now be described by way of example and with reference to the accompanying drawings, in which :

Figure 1 is a schematic side sectional view of a farinaceous mixing machine,

Figure 2 is a graph showing the relation of the power supplied to the motor and the speed of rotation of the mixing implement of Figure 1 during a batch mix,

Figure 3 is a graph of an alternative relation of the power supplied to the motor and the speed of rotation of the mixing implement to that shown in Figure 2, and

Figure 4 is a graph of the power supplied to a motor and the speed of rotation of a mixing implement of an alternative conventional mixing machine (not shown).

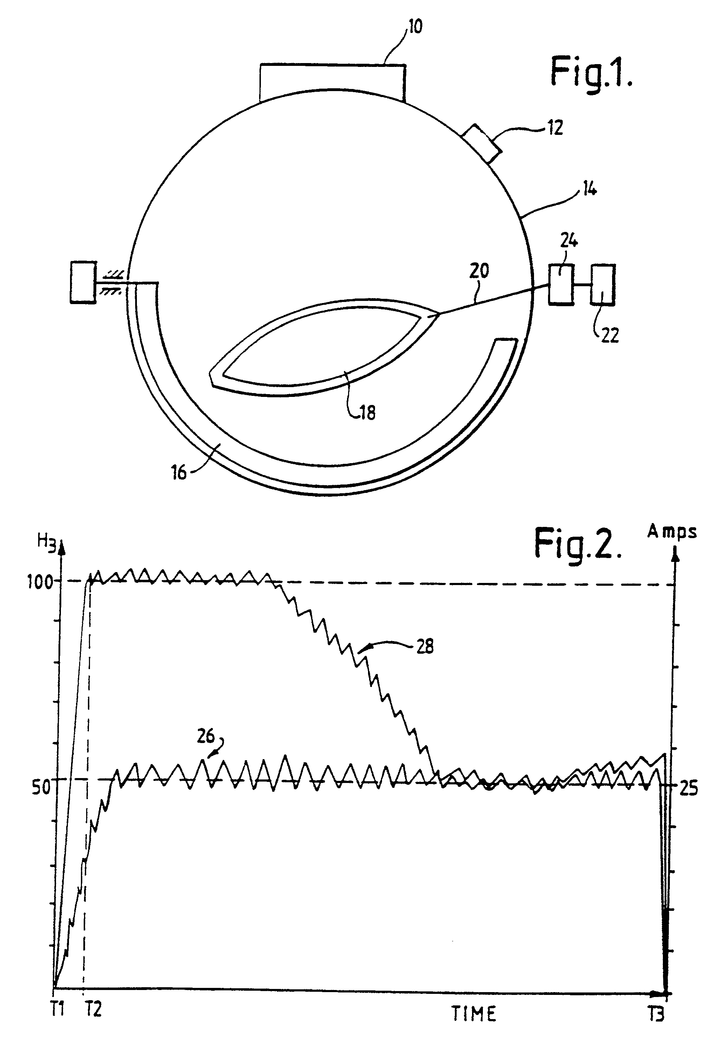

As shown in Figure 1, flour is supplied through an opening 10, and water through an opening 12 into a spherical mixing container 14.

A rotating scraper blade 16 passes adjacent to the inner wall of the container 14, and a mixing implement 18 is rotated about an axis 10 by a motor 22 via a gearbox 24.

A control is provided which monitors the current being supplied to the motor 22 and varies the speed of rotation of the implement 18 to maintain that power substantially constant.

Figure 2 is a graph showing the current 26 (which is proportional to the power) supplied to the motor 22 and the rate of rotation 28 of the implement 18 during a batch mix.

When the flour and water and other ingredients have been added, rotation is commenced at time T1 and the current 26 rapidly increases to 25 amps. During the initial mixing or flocking the mixture is relatively loose and the rate of rotation rises to 100Hz at time T2. Thereafter, as the mixture becomes stiffer and the dough is developed the rate of rotation gradually drops nearer to 50Hz with the current remaining constant at 25 amps. Towards the end of the mix the mixture becomes slightly more free and the rate of rotation increases slightly before the power to the motor is shut off at time T3. Ingredients may be added during mixing.

The duration of the batch mix is approximately 3 minutes.

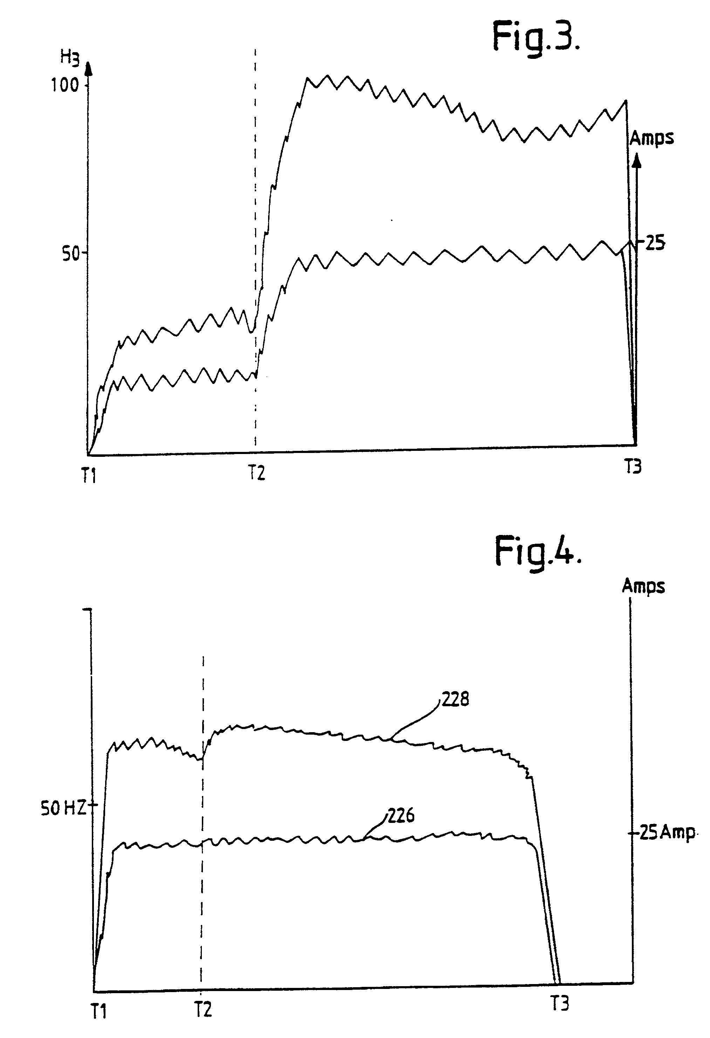

An alternative method of controlling the mixing machine shown in Figure 1 is illustrated in Figure 3. In that embodiment the current 126 and the rate of rotation 128 are supplied and commenced respectively at time T1. The power or current is increased to 30 per cent of its normal operating power and maintained at that level until time T2. During that period the rate of rotation is at a relatively low value. At time T2 the power or current is increased to its full valve of 25 amps where it is maintained to the end of the mixing cycle at time T3. The rate of rotation 128 rises shortly after time T2 to its maximum value of 100 HZ and, as the dough becomes developed and offers more resistance to the rotation of the implement, the rate decreases slightly before increasing just before the end of the mix.

In Figure 4, the power or current 226 supplied to a conventional Tweedy mixer is gradually increased to around 25 amps at the start T1 of the mix and the rate of rotation 228 rises to approximately 75 HZ. At time T2 fat is added to the mix which decreases the resistance of the mix to the rotation of the implement, and the rate of rotation 228 increases whilst the current 226 remains constant. Thereafter the rate of rotation 228 decreases slightly with the current remaining constant to the end of the mix at time T3. The graph shown in Figure 4 is particularly suitable to the mixing of farinaceous products in the United States of America and, if desired, the control may be applied to the machine shown in Figure 1. In this embodiment the current is maintained in the region of 25 amps.

In each of the graphs shown in Figures 2, 3 and 4, the current may be arranged to be monitored and maintained at or in the region of the desired value or valves, for instance by a closed loop control. Alternatively, the current or the rate of rotation may be controlled by a preprogrammed control which increases or decreases either or both values at set times during a mix.

## Claims

1. A method of mixing a batch of farinaceous material with a mixing implement (18) comprising a motor causing said implement to rotate, with the resistance of the farinaceous material to movement of the mixing implement increasing as the material becomes developed, characterised in that the power required by the motor is maintained in the region of a constant level by decreasing the speed of rotation of the implement as the material becomes developed.

2. A method as claimed in Claim 1 comprising maintaining the power required by the motor in the region of a constant level for a part of the mixing of a batch.

3. A method as claimed in Claim 1, comprising maintaining the power required by the motor in the region of a constant level for substantially the whole of the mixing of a batch.

4. A method according to any preceding claim comprising decreasing the speed of rotation in a step.

5. A method according to any of Claims 1 to 3 comprising decreasing the speed of rotation in steps.

6. A method according to any of Claims 1 to 3 comprising decreasing the speed of rotation gradually.

7. A method as claimed in any preceding claim comprising controlling the speed of rotation in accordance with a sensed condition.

8. A method as claimed in any preceding claim comprising setting a current value or limit for the motor and altering the speed of rotation of the implement to maintain that current value or limit at or in the region set.

9. Farinaceous material batch mixing apparatus comprising a container or farinaceous material, a mixing implement (18) arranged to rotate within the container, and a motor adapted to cause rotation of the mixing implement characterised in that control means are provided which are adapted to maintain the power required by the motor in the region of a constant level by decreasing the speed of rotation of the implement automatically as the material in the batch mix becomes developed.

10. Apparatus as claimed in Claim 9 in which the control means are adapted to maintain the power required by the motor in the region of a constant level for substantially the whole of the mixing of a batch.

## Patentansprüche

1. Ein Verfahren zum Mischen einer Charge von mehlartigem Material mit einem Mischgerät (18), das einen Motor umfaßt, welcher bewirkt, daß sich das Gerät dreht, wobei der Widerstand des mehlartigen Materials gegen die Bewegung des Mischgerätes anwächst, indem das Material entwickelt wird, **dadurch gekennzeichnet,** daß die durch den Motor benötigte Leistung in einem Bereich eines konstanten Niveaus durch Verringern der Drehgeschwindigkeit des Gerätes, wenn das Material entwickelt wird, aufrechterhalten wird.

2. Ein Verfahren nach Anspruch 1, welches die Aufrechterhaltung der durch den Motor benötigten Leistung in dem Bereich eines konstanten Niveaus für einen Teil des Mischens einer Charge umfaßt.

3. Ein Verfahren nach Anspruch 1, welches die Aufrechterhaltung der durch den Motor benötigten Leistung in dem Bereich eines konstanten Niveaus über im wesentlichen die gesamte Mischung der Charge umfaßt.

4. Ein Verfahren nach wenigstens einem der vorhergehenden Ansprüche, welches die Verringerung der Drehgeschwindigkeit in einer Stufe umfaßt.

5. Ein Verfahren nach wenigstens einem der Ansprüche 1 bis 3, welches die Verringerung der Drehgeschwindigkeit in Stufen umfaßt.

6. Ein Verfahren nach wenigstens einem der Ansprüche 1 bis 3, welches eine graduelle Verringerung der Drehgeschwindigkeit umfaßt.

7. Ein Verfahren nach wenigstens einem der vorhergehenden Ansprüche, welches die Steuerung der Drehgeschwindigkeit entsprechend einer erfaßten Bedingung umfaßt.

8. Ein Verfahren nach wenigstens einem der vorhergehenden Ansprüche, welches das Einstellen eines Stromwertes oder Grenzwertes für den Motor und das Ändern der Drehgeschwindigkeit des Gerätes umfaßt, um den eingestellten Stromwert oder Grenzwert bei oder in dem eingestellten Bereich zu halten.

9. Eine Mischvorrichtung für eine Charge aus mehlartigem Material, welche einen Behälter für das mehlartige Material, ein Mischwerkzeug (18), das dazu vorgesehen ist, innerhalb des Behälters zu rotieren, und einen Motor, der dazu vorgesehen ist, eine Drehung des Mischwerkzeuges zu bewirken, umfaßt, **dadurch gekennzeichnet,** daß Steuermittel vorgesehen sind, welche dazu dienen, die durch den Motor benötigte Leistung in einem Bereich eines konstanten Niveaus durch automatisches Verringern der Drehgeschwindigkeit des Werkzeugs zu halten, wenn das Material in der Chargenmischung in den entwickelten Zustand gelangt.

10. Vorrichtung nach Anspruch 9, wobei die Steuermittel dazu vorgesehen sind, die durch den Motor benötigte Leistung in dem Bereich eines konstanten Niveaus über im wesentlichen die Gesamtheit der Mischung einer Charge zu halten.

**Revendications**

1. Méthode de mélange d'une charge de matière farineuse à l'aide d'un instrument mélangeur (18) comportant un moteur qui le fait tourner, la résistance de la matière farineuse au mouvement de l'instrument mélangeur augmentant au fur et à mesure que ladite matière se développe, caractérisée en ce que la puissance requise par le moteur est maintenue dans la zone d'un niveau constant grâce à une réduction de la vitesse de rotation de l'instrument au fur et à mesure que la matière se développe.

2. Méthode telle que revendiquée dans la revendication 1, consistant à maintenir la puissance requise par le moteur dans la zone d'un niveau constant pendant une partie du mélange d'une charge.

3. Méthode telle que revendiquée dans la revendication 1, consistant à maintenir la puissance requise par le moteur dans la zone d'un niveau constant pendant à peu près toute la durée du mélange d'une charge.

4. Méthode selon l'une quelconque des revendications précédentes, consistant à réduire en une étape la vitesse de rotation.

5. Méthode selon l'une quelconque des revendications 1 à 3, consistant à réduire par étapes la vitesse de rotation.

6. Méthode selon l'une quelconque des revendications 1 à 3, consistant à réduire progressivement la vitesse de rotation.

7. Méthode telle que revendiquée dans l'une quelconque des revendications précédentes, consistant à régler la vitesse de rotation en fonction d'une condition détectée.

8. Méthode telle que revendiquée dans l'une quelconque des revendications précédentes, consistant à fixer une valeur ou une limite de courant pour le moteur et à modifier la vitesse de rotation de l'instrument afin de maintenir ladite valeur ou limite de courant au niveau de la zone fixée ou dans cette zone.

9. Appareil mélangeur de charge de matière farineuse, comportant un récipient pour la matière farineuse, un instrument mélangeur (18) disposé pour tourner à l'intérieur du récipient, et un moteur adapté pour faire tourner ledit instrument mélangeur, caractérisé en ce qu'il est prévu des moyens de réglage adaptés pour maintenir la puissance requise par le moteur dans la zone d'un niveau constant grâce à une réduction automatique de la vitesse de rotation de l'instrument au fur et à mesure que le mélange de la charge se développe.

10. Appareil tel que revendiqué dans la revendication 9, dans lequel les moyens de réglage sont adaptés pour maintenir la puissance requise par le moteur dans la zone d'un niveau constant pendant à peu près toute la durée du mélange d'une charge.

Fig.1.

Fig.2.

# Fig.3.

# Fig.4.